# EUROPÄISCHE PATENTSCHRIFT

(11) **EP 4 040 197 B1**
(45) Veröffentlichungstag und Bekanntmachung des Hinweises auf die Patenterteilung: **06.11.2024**
(21) Anmeldenummer: 21156090.9
(22) Anmeldetag: 09.02.2021
(51) Int. Cl.: G01V 8/22, F16P 3/14, G01S 17/42

(54) **SPEKTRAL SENSITIVE OPTOELEKTRONISCHE VORRICHTUNG UND VERFAHREN ZUR ÜBERWACHUNG EINES ÜBERWACHUNGSBEREICHS**
SPECTRAL SENSITIVE OPTOELECTRONIC DEVICE AND METHOD FOR MONITORING OF A SURVEILLANCE AREA
DISPOSITIF OPTOÉLECTRONIQUE SENSIBLE AU SPECTRE ET PROCÉDÉ DE SURVEILLANCE D'UNE ZONE DE SURVEILLANCE

(43) Veröffentlichungstag der Anmeldung: 10.08.2022
(73) Patentinhaber: SICK AG, 79183 Waldkirch (DE)
(72) Erfinder: Albrecht, Roland, 79312 Emmendingen (DE); Eble, Johannes, 79183 Waldkirch (DE); Hofmann, Christoph, 79183 Waldkirch (DE); Albert, Magnus, 79104 Freiburg (DE)

(56) Entgegenhaltungen:
- EP-A2- 0 793 208
- EP-A2- 2 317 347
- FR-A1- 2 442 457
- US-A1- 2021 033 747

## Beschreibung

Die Erfindung betrifft eine spektral sensitive optoelektronische Vorrichtung und ein Verfahren zur Überwachung eines Überwachungsbereichs nach dem Oberbegriff von Anspruch 1 beziehungsweise Anspruch 11.

Das primäre Ziel der Sicherheitstechnik ist, Personen vor Gefahrenquellen zu schützen, wie sie beispielsweise Maschinen im industriellen Umfeld darstellen. Die Maschine wird mit Hilfe von Sensoren überwacht, und wenn demnach eine Situation vorliegt, in der eine Person gefährlich nahe an die Maschine zu gelangen droht, wird eine geeignete Absicherungsmaßnahme ergriffen.

Herkömmlich werden vor allem optoelektronische Sensoren wie Lichtgitter oder Laserscanner für eine sicherheitstechnische Überwachung eingesetzt. In jüngerer Zeit treten 3D-Kameras hinzu. In der Sicherheitstechnik eingesetzte Sensoren müssen besonders zuverlässig arbeiten und deshalb hohe Sicherheitsanforderungen erfüllen, beispielsweise die Norm EN13849 für Maschinensicherheit und die Gerätenorm IEC61496 oder EN61496 für berührungslos wirkende Schutzeinrichtungen (BWS). Zur Erfüllung dieser Sicherheitsnormen sind eine Reihe von Maßnahmen zu treffen, wie sichere elektronische Auswertung durch redundante, diversitäre Elektronik, Funktionsüberwachung oder speziell Überwachung der Verschmutzung optischer Bauteile.

Ein gängiges Absicherungskonzept sieht vor, dass Schutzfelder konfiguriert werden, die während des Betriebs der Maschine vom Bedienpersonal nicht betreten werden dürfen. Ein optoelektronischer Sicherheitssensor erfasst geometrische Informationen über seine Umgebung und setzt dies mit einer intern hinterlegten Geometrie eines Schutzfeldes in Beziehung. Konkret werden vorkonfigurierte Schutzfelder oder Schutzvolumina programmiert, und es wird eine Überschneidung der gemessenen Umgebungskontur mit diesen Schutzbereichen detektiert. Erkennt der Sensor auf diese Weise einen unzulässigen Schutzfeldeingriff, etwa ein Bein einer Bedienperson, so wird die Maschine veranlasst, in einen sicheren Zustand zu wechseln.

Die EP 0 793 208 A2 beschreibt eine spektrale Detektion für eine sicherheitsgerichtete Anwendung, wobei ein Eingriff eines Gegenstands (beispielsweise der Eingriff einer Hand in eine Maschine), durch Detektion von Wärmestrahlung ermittelt wird. Ausführungsbeispiele mit Detektion im optischen Wellenlängenbereich sind ebenfalls beschrieben, wobei jeweils eine vorgegebene spektrale Signatur des eingreifenden Gegenstands erkannt wird. Daher muss beispielweise zur Detektion einer Hand ein Reflektor mit bekannter spektraler Signatur an der Hand angeordnet sein (z.B. an einem Handschuh).

Aus der EP 2 064 480 B1 ist eine Werkzeugmaschinenüberwachungsvorrichtung bekannt, welche basierend auf einer spektralen Auswertung eine Unterscheidung zwischen einem zu bearbeitenden Material und einem menschlichen Gewebe vornehmen und sicherheitskritische Aktionen ableiten kann. Somit ist auch hier eine Ermittlung der spektralen Signatur des eingreifenden Gegenstandes nötig. Die genannte Vorrichtung arbeitet mit ultrabreitbandigen (oder Ultra Wide Band oder UWB) Signalen, welche ein Frequenzspektrum mit einer Mittenfrequenz im Frequenzbereich von 1 GHz bis 15 GHz aufweisen (also im Radarbereich), so dass die Ortsauflösung limitiert ist.

Die EP 2 233 818 B1 beschreibt einen Sicherheitssensor, der ein sicherheitskritisches Objekt durch eine im Sicherheitssensor durchgeführte Spektralanalyse sicher von anderen, nicht sicherheitskritischen Objekten unterscheiden kann, wobei ebenfalls eine Erkennung des sicherheitskritischen Objekts nötig ist, dessen spektrale Charakteristik also bekannt sein muss.

Aus der US 2021 033 747 A1 ist ein System zum Erkennen von Hindernissen bekannt, wobei ein Sender ein erstes Signal mit einer ersten Wellenlänge und ein zweites Signal mit einer zweiten, von der ersten Wellenlänge verschiedenen Wellenlänge aussendet. Ein Reflektor reflektiert das erste Signal auf einen Detektor, der Signale erkennen kann, die sowohl mit der ersten Wellenlänge und der zweiten Wellenlänge gebildet werden. Erkennt der Detektor ein Signal mit der ersten und der zweiten Wellenlänge, stellt der Detektor oder ein zugehöriges Steuergerät fest, dass ein im Wesentlichen reflektiver Fremdkörper in einen Sichtlinienpfad zwischen Sender und Reflektor eingedrungen ist

Die FR 2 442 457 A1 offenbart ein fotoelektrisches Sicherheitssystem zur Erkennung von Produkten oder Objekten. Zwei Lichtstrahlen unterschiedlicher Wellenlänge werden von einem Sender in dieselbe Richtung ausgestrahlt. Die Strahlen werden von einem Reflektor zu einem Empfänger reflektiert. wobei nur einer der ausgesendeten Lichtstrahlen mit einer bestimmten Wellenlänge reflektiert wird. Beim Eintritt von Produkten oder Objekten zwischen Sender und Reflektor werden die Lichtstrahlen beider Wellenlängen auf den Empfänger reflektiert, wodurch ein Objektfeststellungssignal generiert werden kann.

Die genannten Verfahren aus dem Stand der Technik basieren auf der Erkennung bekannter spektraler Signaturen von Objekten, um deren Eindringen in einen Überwachungsbereich zu detektieren. Nachteilig ist dabei, dass die spektralen Signaturen der Objekte bekannt sein oder eingelernt werden müssen, oder die Objekte mit Markierungen bekannter spektraler Signaturen versehen werden müssen.

Es ist daher Aufgabe der Erfindung, eine verbesserte spektral sensitive optoelektronische Vorrichtung und ein Verfahren zur Überwachung eines Überwachungsbereichs anzugeben.

Die Erfindung geht von dem Grundgedanken aus, dass ein Überwachungsbereich wenigstens eine Referenzstruktur aufweist, die Licht mit einer vorgegebenen spektralen Charakteristik erzeugt (im Folgenden auch "Referenzlicht" genannt), das von einem oder mehreren Lichtempfängern eines spektral sensitiven optoelektronischen Sensors (im Folgenden auch "Spektralsensor" genannt) erfasst und in Empfangssignale umgewandelt wird.

Die Erzeugung des Referenzlichts durch die Referenzstruktur kann passiv (beispielsweise durch Remission und/oder Reflexion von Sendelicht oder durch von Sendelicht induzierter Lumineszenz) oder aktiv (beispielsweise durch eine Referenzlichtquelle) erfolgen.

Der Begriff "spektrale Charakteristik" ist als spektrale Zusammensetzung von Licht zu verstehen, insbesondere des von der Referenzstruktur und/oder Objekten im Überwachungsbereich emittierten, remittierten und/oder reflektierten Lichts, das vom Lichtempfänger als Empfangslicht erfasst wird.

Befindet sich kein Objekt im Überwachungsbereich, gelangt das Referenzlicht als Empfangslicht mit unveränderter, vorgegebener spektraler Charakteristik zum Lichtempfänger. Ein in den Überwachungsbereich zwischen der Referenzstruktur und dem Spektralsensor eingreifendes Objekt führt zu einer veränderten, beziehungsweise vollständig unspezifischen spektralen Charakteristik des Empfangslichts, die vom Spektralsensor erfasst werden kann. Eine Steuer- und Auswerteeinheit ist dazu ausgebildet, die erfasste spektrale Charakteristik des Empfangslichtes mit der vorgegebenen spektralen Charakteristik des Referenzlichts zu vergleichen. Bei einer vorbestimmten Abweichung der erfassten spektralen Charakteristik von der vorgegebenen spektralen Charakteristik kann die Steuer- und Auswerteeinheit eine sicherheitsgerichtete Aktion auslösen. Damit wird das Prinzip der Negativklassifizierung angewandt, wobei zunächst nicht sicherheitsrelevante Elemente detektiert werden und eine Störung der Detektion als sicherheitskritisches Ereignis bewertet wird.

Die Referenzstruktur kann beispielswiese als Referenzfläche ausgebildet sein, die einen Hintergrund eines zu überwachenden Überwachungsbereichs bildet. In einer weiteren Ausführungsform kann die Referenzstruktur an den Rändern des zu überwachenden Überwachungsbereichs angeordnet sein. Die vom Spektralsensor zu überwachende Fläche ist dann auf diese Ränder begrenzt, und es kann ein Eintreten und/oder Austreten eines Objekts in, beziehungsweise aus dem Überwachungsbereich detektiert werden.

Die spektrale Charakteristik des Referenzlichts kann ein kontinuierliches Wellenlängenspektrum oder diskrete Wellenlängen oder Wellenlängenbereiche aufweisen. Kontinuierliche Spektren oder diskrete Wellenlängen oder Wellenlängenbereiche können beispielsweise im sichtbaren (VIS, 450nm - 780nm) oder im nah-infraroten (NIR, 800nm - 2500nm) Wellenlängenbereich liegen.

Das Referenzlicht kann auf verschiedene Weisen erzeugt werden. Zum einen kann eine Sendelichtquelle die Referenzstruktur mit Sendelicht beleuchten, wobei das Sendelicht eine vorgegebene spektrale Zusammensetzung aufweisen kann. Die spektrale Zusammensetzung des Sendelichts kann breitbandig sein, diskrete Wellenlängen oder Wellenlängenbereiche aufweisen, oder sich zeitlich verändern (frequency chirp). Die Referenzstruktur erzeugt durch Remission und/oder Reflektion des Sendelichts Referenzlicht mit einer vorgegebenen spektralen Charakteristik, die sich durch die spektrale Zusammensetzung des Sendelichts und dem Reflexions- und/oder Remissionsverhalten der Referenzstruktur ergibt. Das Referenzlicht kann vom spektral sensitiven optoelektronischen Sensor erfasst werden. Ergibt sich beim Eintreten eines Objekts in den Überwachungsbereich aufgrund der Remissions- und/oder Reflexionseigenschaften des Objekts eine Änderung der spektralen Zusammensetzung des vom Spektralsensor erfassten Lichts, kann wie oben beschrieben eine sicherheitsgerichtete Aktion ausgelöst werden. Die Remissions- und/oder Reflexionseigenschaften der Referenzstruktur können bevorzugt so gewählt werden, dass sie sich von den Remissions- und/oder Reflexionseigenschaften der zu detektierenden Objekte unterscheiden.

In einer alternativen Ausführungsform kann das Referenzlicht durch Lumineszenz der Referenzstruktur erzeugt werden. Die Referenzstruktur kann dabei ein oder mehrere lumineszierende, insbesondere fluoreszierende Materialien aufweisen, welche mit vorzugsweise ultraviolettem oder blauem Sendelicht beleuchtet werden und zum Sendelicht wellenlängenverschobenes Referenzlicht emittieren. Durch geeignete Wahl des oder der lumineszierenden Materialien kann Referenzlicht mit einer vorgegebenen spektralen Charakteristik erzeugt werden. Die lumineszierenden Materialien können bevorzugt so gewählt werden, dass sich die spektrale Charakteristik des Referenzlichts eindeutig von der spektralen Charakteristik des von den zu detektierenden Objekten als Objektlicht remittierten und/oder reflektierten Sendelichts unterscheidet.

Im NIR-Spektralbereich kann die spektrale Charakteristik des Referenzlichts beispielswiese durch Absorptionsspektren erzeugt werden, die durch Anregung von Ober- und Kombinationsschwingungen in organischen Molekülbindungen (OH, CH, NH, C=O, SH) eines Materials der Referenzstruktur entstehen. Das Material kann bevorzugt so gewählt werden, dass sich die spektrale Charakteristik seines Absorptionsspektrums eindeutig von der spektralen Charakteristik der Absorptionsspektren der zu detektierenden Objekte unterscheidet. Soll als sicherheitsrelevanter Eingriff beispielsweise der Eingriff einer Hand detektiert werden, eignen sich als Materialien für die Referenzstruktur bevorzugt Kunststoffe, Holz oder andere organische Materialien, da diese bezüglich ihrer spektralen Charakteristik eindeutig von menschlicher Haut unterscheidbar sind.

Im Falle einer spektralen Charakteristik, die sich durch diskrete Wellenlängen oder Wellenlängenbereiche auszeichnet, können ausgewählte charakteristische Absorptionsbanden des Materials als Referenz dienen. In diesem Fall kann eine Spektralanalyse durch gezielte Detektion weniger diskreter Wellenlängen beziehungsweise Wellenlängenbereiche beschleunigt werden und mehrdeutige Spektralregionen, in denen die Referenzstruktur und die zu detektierenden Objekte Licht mit ähnlicher spektraler Charakteristik aussenden, vermieden werden.

In einer weiteren Ausführungsform kann die Referenzstruktur wenigstens eine Referenzlichtquelle mit einer vorgegebenen spektralen Charakteristik zur Erzeugung des Referenzlichts aufweisen.

Die Referenzstruktur kann eine Vielzahl von Teilstrukturen aufweisen, wobei die Teilstrukturen Referenzlicht mit unterschiedlichen spektralen Charakteristiken erzeugen können. Die Teilstrukturen können ein Muster bilden, beispielsweise zwei kreisförmig um ein zu überwachendes Objekt angeordnete, ringförmige Zonen. Bewegt sich das Objekt aus dem Überwachungsbereich hinaus, tritt zunächst eine Änderung der spektralen Charakteristik des Referenzlichts der inneren Zone auf, bewegt sich das Objekt weiter, wird auch eine Änderung der spektralen Charakteristik des Referenzlichts der äußeren Zone auftreten. Somit kann aus einer Änderung der spektralen Charakteristik des Referenzlichtes zusätzlich eine Ortsinformation ermittelt und damit die Überwachung des Überwachungsbereichs verbessert werden.

Der spektral sensitive optoelektronische Sensor ist als bildgebender Spektralsensor ausgeführt, kann also räumlich aufgelöste Spektraldaten von Objekten im Überwachungsbereich und insbesondere der Referenzstruktur ermitteln, beispielsweise durch punktweises Abtasten mit einem scannenden Spektrometer. In einer weiteren Ausführungsform kann der spektral sensitive optoelektronische Sensor als multi- oder hyperspektrale Kamera oder als multiphysikalische 3D-Kamera ausgeführt sein. Der Sensor kann auch als Anordnung eines oder mehrerer spektral sensitiver Punkt- oder Liniensensoren, beispielsweise Fabry-Perot Interferometern, ausgeführt sein.

Der Spektralsensor kann dazu eingerichtet sein, anstelle des gesamten Wellenlängenspektrums des empfangenen Lichts diskrete Wellenlängen oder Wellenlängenbereiche auszuwerten (multispektrale Auswertung), wodurch die Datenmengen verringert werden und die Auswertung vereinfacht und beschleunigt wird.

In einer Ausführungsform kann der Spektralsensor derart ausgeführt sein, dass der Lichtempfänger eine zeitliche Abfolge von Licht diskreter Wellenlängen oder Wellenlängenbereiche empfängt, beispielsweise dadurch, dass die Referenzstruktur mit einer zeitlichen Abfolge von Sendelicht diskreter Wellenlängen oder Wellenlängenbereiche beleuchtet wird oder diese selbst aktiv abgibt. Die diskreten Wellenlängen oder Wellenlängenbereiche können dabei auch überlappen. Eine spektrale Aufspaltung des empfangenen Referenzlichts ist dann nicht nötig, die spektrale Sensitivität ergibt sich aus der zeitlich aufgelösten Detektion und der a priori Information über die zeitliche Abfolge der Wellenlängen des Sendelichts. Die Steuer- und Auswerteeinheit kann dazu die Lichtsender und Lichtempfänger synchronisieren.

Die Steuer- und Auswertungseinheit kann für einen Einlernmodus ausgebildet sein, in dem die vorgegebene spektrale Charakteristik des Referenzlichts bei freiem Überwachungsbereich eingelernt wird. Dies kann schon in der Fertigung oder später im Feld geschehen. In der Fertigung können beispielsweise Vorrichtungen, bei denen Referenzstruktur, Lichtsender und Lichtempfänger bereits in einem Modul zusammengefasst sind, kalibriert werden. Im Feld kann das Einlernen beziehungsweise Kalibrieren der vorgegebenen spektralen Charakteristik Teil eines Kalibrier- oder Wartungsprozesses sein, wobei insbesondere Umgebungsbedingungen der Vorrichtung, beispielsweise externe Lichtquellen berücksichtigt werden können.

Dem Lichtempfänger kann ein Filter zur Filterung des Sendelichts vorgeschaltet sein. Damit kann eine Beeinflussung der Spektralanalyse des Empfangslichts durch Sendelicht und/oder Umgebungslicht verringert werden.

Der Spektralsensor kann weiterhin dazu eingerichtet sein, zusätzlich zu den Spektraldaten der Objekte und/oder der Referenzstruktur räumliche Daten wie Größe oder Form der Objekte zu erfassen. Damit kann beispielsweise eine Klassifizierung der Objekte nach Größe oder Form erfolgen. Wenn sowohl spektrale Daten als auch räumliche Daten erfasst werden, ist eine diversitäre Auswertung der erfassten Daten möglich.

Der Spektralsensor kann auch dazu ausgebildet sein, Spektraldaten der Objekte und/oder der Referenzstruktur oder Auswertungsergebnisse wie die Abweichung der erfassten spektralen Charakteristik von der vorgegebenen spektralen Charakteristik des Empfangslichts mit Ergebnissen anderer Sicherheitssensoren wie beispielsweise Lichtgittern zu verknüpfen und logisch zu verarbeiten. Damit kann die Sicherheit eines mehrere Sicherheitssensoren umfassenden Systems erhöht werden.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Darstellung einer Ausführungsform der erfindungsgemäßen Vorrichtung
- Fig. 2: eine schematische Darstellung einer alternativen Ausführungsform der erfindungsgemäßen Vorrichtung
- Fig. 3: eine schematische Darstellung einer weiteren Ausführungsform der erfindungsgemäßen Vorrichtung mit einer mehrere Teilstrukturen aufweisenden Referenzstruktur
- Fig. 4: eine schematische Darstellung einer Ausführungsform der erfindungsgemäßen Vorrichtung mit einer Referenzstruktur, die eine eigene Lichtquelle aufweist
- Fig. 5: eine schematische Darstellung einer Ausführungsform der erfindungsgemäßen Vorrichtung als Lichtgitter

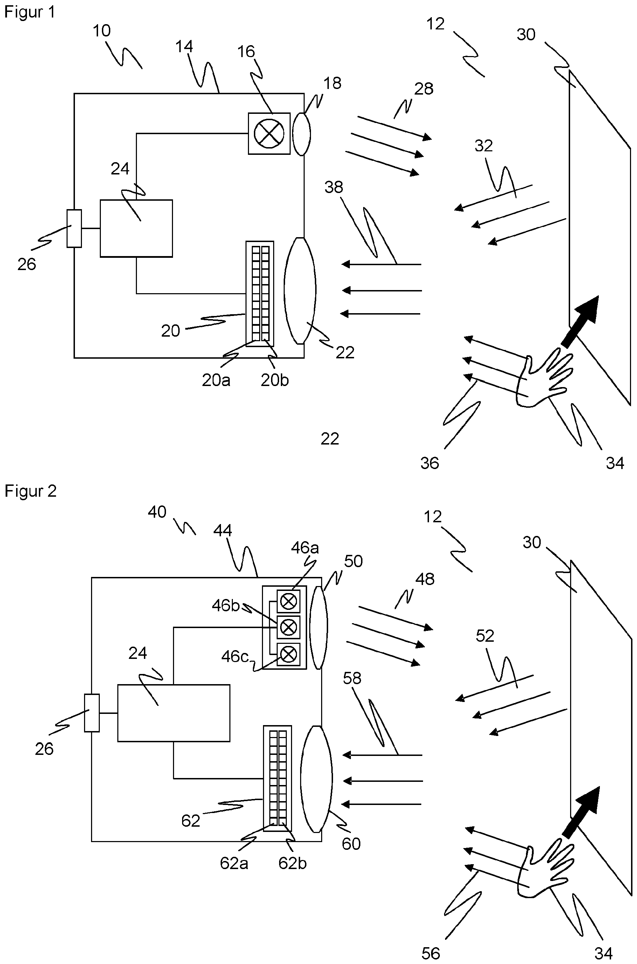

Figur 1 zeigt eine schematische Darstellung einer Ausführungsform einer erfindungsgemäßen Vorrichtung 10 zur Überwachung eines Überwachungsbereichs 12. Die Vorrichtung 10 weist einen Sensor 14 mit einer Sendelichtquelle 16 und einer Sendeoptik 18 sowie einen Lichtempfänger 20 mit einer Empfangsoptik 22 auf. Eine Steuer- und Auswerteeinheit 24 ist mit der Sendelichtquelle 16 und dem Lichtempfänger 20 verbunden und zum Steuern der Sendelichtquelle 16 und des Lichtempfängers 20 sowie zum Empfangen von Empfangssignalen des Lichtempfängers 20 eingerichtet. Die Steuer- und Auswerteeinheit 24 kann die Empfangssignale auswerten und basierend auf der Auswertung über eine Schnittstelle 26 eine sicherheitsgerichtete Aktion auslösen, beispielsweise das Aktvieren einer Warnleuchte, das Abschalten einer Maschine oder die Abgabe eines Signals an eine übergeordnete Sicherheitssteuerung.

Von der Sendelichtquelle 16 emittiertes Sendelicht 28 mit einer spektralen Charakteristik, die eine Vielzahl von Wellenlängen umfasst (polychromatisches Sendelicht), wird von der Sendeoptik 18 auf eine im, beziehungsweise am Rande des Überwachungsbereichs 12 angeordnete Referenzstruktur 30 projiziert und von der Referenzstruktur 30 als Referenzlicht 32 mit einer vorgegebenen spektralen Charakteristik remittiert und/oder reflektiert. Die Referenzstruktur 30 erzeugt also das Referenzlicht 32 durch Remission und/oder Reflexion des Sendelichts 28, wobei sich die vorgegebene spektrale Charakteristik des Referenzlichts 32 aus der spektralen Zusammensetzung des Sendelichts 28 und dem Remissions- und/oder Reflexionsverhalten der Referenzstruktur 30 ergibt. Befindet sich ein Objekt 34 im Überwachungsbereich 12, wird Sendelicht 28 vom Objekt 34 als Objektlicht 36 remittiert und/oder reflektiert. Referenzlicht 32 und/oder Objektlicht 36 gelangen als Empfangslicht 38 zurück zum Sensor 16 und werden von der Empfangsoptik 22 auf den Lichtempfänger 20 abgebildet und von diesem erfasst. Der Lichtempfänger 20 ist als Multi- beziehungsweise Hyperspektralkamera ausgelegt und weist eine Vielzahl matrixförmig angeordneter Empfangselemente 20a, 20b auf, wobei jedes Empfangselement 20a, 20b eine Intensität und spektrale Zusammensetzung des vom Empfangselement 20a, 20b erfassten Empfangslichts 38 ermitteln kann, die als Empfangssignale von der Steuer- und Auswerteeinheit 24 empfangen werden. Die Steuer- und Auswerteeinheit 24 ist dazu ausgebildet, aus den Empfangssignalen eine erfasste spektrale Charakteristik des Empfangslichts 38 zu bestimmen und diese mit der in der Steuer- und Auswerteeinheit hinterlegten vorgegebenen spektralen Charakteristik des Referenzlichts 32 zu vergleichen. Die vorgegebene spektrale Charakteristik des Referenzlichts 32 kann theoretisch (aus der bekannten spektralen Zusammensetzung des Sendelichts 28 und dem Remissions- und/oder Reflexionsverhalten der Referenzstruktur 30) oder in einem Einlernvorgang bestimmt werden. Befindet sich ein Objekt 34 im Überwachungsbereich 12, erfolgt eine Mischung des Referenzlichts 32 mit dem Objektlicht 36, so dass sich die spektrale Charakteristik des Empfangslichts 38 von der vorgegebenen spektralen Charakteristik des Referenzlichts 32 unterscheidet. Damit kann ein Eingriff des Objekts 34 in den Überwachungsbereich 12 erfasst werden und die Steuer- und Auswerteeinheit 24 eine sicherheitsgerichtete Aktion auslösen.

Figur 2 zeigt eine schematische Darstellung einer alternativen Ausführungsform einer erfindungsgemäßen Vorrichtung 40 zur Überwachung eines Überwachungsbereichs 12. Im Unterschied zu der in der Figur 1 beschriebenen Ausführungsform weist der Sensor 44 mehrere Sendelichtquellen 46a, 46b, 46c auf, wobei jede Sendlichtquelle 46a, 46b, 46c Sendelicht 48 einer vorgegebenen diskreten Wellenlänge (oder eines Wellenlängenbereichs) aussendet, die sich von den Wellenlängen (oder Wellenlängenbereichen) des von den jeweils anderen Sendelichtquellen emittierten Sendelichts zumindest teilweise unterscheidet. Die Sendelichtquellen 46a, 46b, 46c werden alternierend aktiviert, so das jeweils nur eine der Sendelichtquellen 46a, 46b, 46c Sendelicht 48 emittiert, welches von der Sendeoptik 50 auf ein im, beziehungsweise am Rande des Überwachungsbereichs 12 angeordnete Referenzstruktur 30 projiziert und von der Referenzstruktur 30 als Referenzlicht 52 mit einer vorgegebenen spektralen Charakteristik remittiert und/oder reflektiert wird. Befindet sich ein Objekt 34 im Überwachungsbereich 12, wird Sendelicht 48 vom Objekt 34 als Objektlicht 56 remittiert und/oder reflektiert. Referenzlicht 52 und/oder Objektlicht 56 gelangen als Empfangslicht 58 zurück zum Sensor 44 und werden von der Empfangsoptik 60 auf den Lichtempfänger 62 abgebildet und von diesem erfasst. Im Gegensatz zur in der Figur 1 beschriebenen Ausführungsform muss der Lichtempfänger 60 nicht spektral selektiv arbeiten, sondern lediglich zur Messung einer Intensität des Empfangslichts 58 ausgebildet sein. Die Steuer- und Auswerteeinheit 24 ist dabei dazu eingerichtet, die Sendelichtquellen 46a, 46b, 46c und den Lichtempfänger 60 derart zu synchronisieren, dass den vom Lichtempfänger 60 erzeugten Empfangssignalen die jeweilige Wellenlänge des Sendelichts 48 zugeordnet und so die spektrale Charakteristik des Empfangslichts 58 erfasst werden kann. Die erfasste spektrale Charakteristik des Empfangslichts 58 kann dann wie in dem in Figur 1 gezeigten Ausführungsbeispiel mit einer in der Steuer- und Auswerteeinheit hinterlegten vorgegebenen spektralen Charakteristik des Referenzlichts 52 verglichen werden. Die vorgegebene spektrale Charakteristik des Referenzlichts 52 kann theoretisch (aus der bekannten spektralen Zusammensetzung des Sendelichts 48 und dem Remissions- und/oder Reflexionsverhalten der Referenzstruktur 30) oder in einem Einlernvorgang bestimmt werden. Befindet sich ein Objekt im Überwachungsbereich 12, erfolgt eine Mischung des Referenzlichts 52 mit dem Objektlicht 56, so dass sich die spektrale Charakteristik des Empfangslichts 58 von der vorgegebenen spektralen Charakteristik des Referenzlichts 52 unterscheidet. Damit kann ein Eingriff des Objekts 34 in den Überwachungsbereich 12 erfasst werden und die Steuer- und Auswerteeinheit 24 eine sicherheitsgerichtete Aktion auslösen.

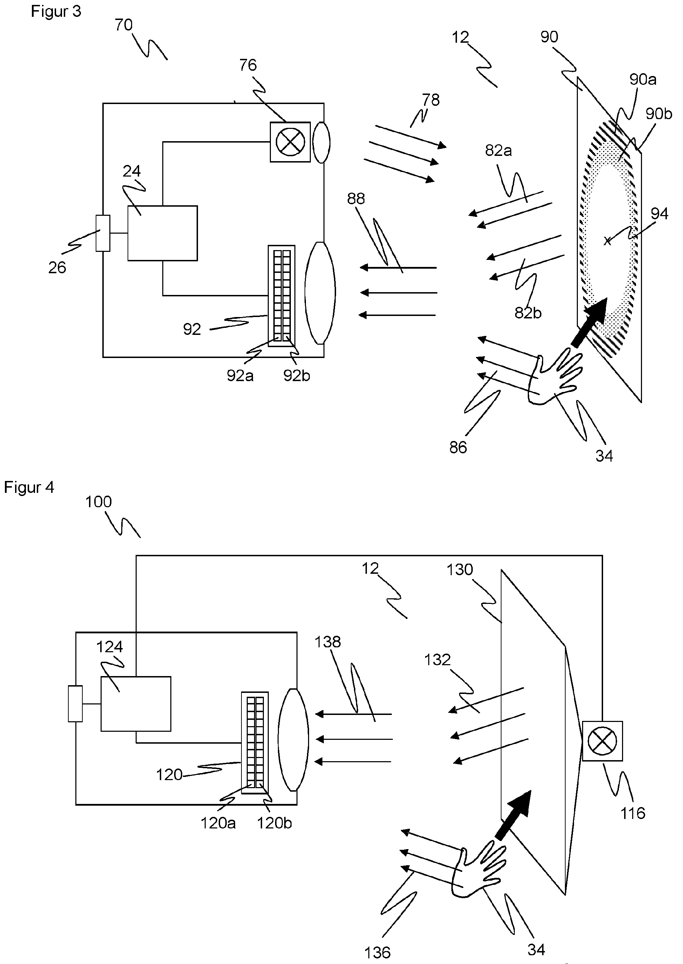

Figur 3 zeigt eine schematische Darstellung einer alternativen Ausführungsform einer erfindungsgemäßen Vorrichtung 70 zur Überwachung eines Überwachungsbereichs 12. Im Unterschied zu den in den Figuren 1 und 2 gezeigten Ausführungsbeispielen weist die Referenzstruktur 90 zwei Teilstrukturen 90a, 90b auf, die als fluoreszierende Bereiche ausgeführt sind. Die fluoreszierenden Bereiche der Teilstrukturen 90a, 90b emittieren nach Beleuchtung durch von der Sendelichtquelle 76 ausgesendetem Sendelicht 78 Referenzlicht 82a, 82b, das gegenüber dem Sendelicht 78 rotverschoben ist, also eine längere Wellenlänge aufweist. Die Wellenlängen des Sendelichts 78 können auf die Fluoreszenzeigenschaften der fluoreszierenden Bereiche der Teilstrukturen 90a, 90b angepasst sein. Dem Lichtempfänger 92 ist ein Filter 94 zum Filtern des Sendelichts 78 vorgeschaltet. Der Lichtempfänger 92 ist spektral sensitiv ausgestaltet, beispielswiese wie im in Figur 1 beschriebenen Ausführungsbeispiel als Multi- beziehungsweise Hyperspektralkamera und weist eine Vielzahl matrixförmig angeordneter Empfangselemente 92a, 92b auf, wobei jedes Empfangselement 92a, 92b eine Intensität und spektrale Zusammensetzung des vom Empfangselement erfassten Empfangslichts 88 ermitteln kann, die als Empfangssignale von der Steuer- und Auswerteeinheit 24 empfangen werden. Grundsätzlich ist aber auch die Verwendung eines nicht spektral selektiven Lichtempfängers mit einer Anordnung von alternierend aktivierten Sendelichtquellen wie im in Figur 3 beschriebenen Ausführungsbeispiel möglich, wobei die Sendlichtquellen alternierend Sendelicht mit auf die Fluoreszenzeigenschaften der fluoreszierenden Bereiche angepassten Wellenlängen aussenden, und die Erfassung des Empfangslichts mit der Aktivierung der Sendelichtquellen synchronisiert ist. Wie zu den vorherigen Ausführungsbeispielen erläutert, führt ein Eingriff eines Objektes 34 in den Überwachungsbereich 12 zu einer Änderung der spektralen Charakteristik des Empfangslichts 88, in diesem Ausführungsbeispiel im Wesentlichen dadurch, dass die als fluoreszierenden Bereiche ausgeführten Teilstrukturen 90a, 90b der Referenzstruktur 90 derart ausgebildet sind, dass sich ihre Fluoreszenzeigenschaften von denen des zu erfassenden Objekt 34 unterscheiden, so dass die spektrale Charakteristik des Empfangslichtes 88 bei Eintritt des Objekts 34 von der vorgegebenen spektralen Charakteristik des Referenzlichts 82 abweicht.

Die Teilstrukturen 90a, 90b der Referenzstruktur 90 des Ausführungsbeispiels sind als konzentrische, kreisförmige fluoreszierende Bereiche mit unterschiedlichen Fluoreszenzeigenschaften ausgelegt, so dass sich die spektralen Charakteristiken des von den beiden Teilstrukturen 90a, 90b erzeugten Referenzlichts 82a, 82b unterscheiden. Beim Eindringen des Objekts 34 in den Überwachungsbereich 12 ändert sich die spektrale Charakteristik des Empfangslichts 88 abhängig von der Überdeckung der Teilstrukturen 90a, 90b durch das Objekt 34, so dass aus einer Änderung der spektralen Charakteristik des Empfangslichts 88 eine Position des Objekts 34 in Bezug auf einen Mittelpunkt 94 der konzentrischen, kreisförmigen Teilstrukturen 90a, 90b bestimmt werden kann

In Figur 4 ist eine weitere Ausführungsform einer erfindungsgemäßen Vorrichtung 100 gezeigt. Im Unterschied zu den vorhergehenden Ausführungsbeispielen weist die Referenzstruktur 130 eine eigene Lichtquelle auf. Das Referenzlicht 132 wird also nicht durch Remission oder Reflexion von Sendelicht oder durch Sendelicht angeregte Lumineszenz (z.B. Fluoreszenz) erzeugt, sondern die Referenzstruktur 130 weist eine von der Steuer- und Auswerteeinheit 24 angesteuerte Referenzlichtquelle 116 auf, die aktiv Referenzlicht 132 mit einer vorgegebenen spektralen Charakteristik aussendet. Tritt ein Objekt 34 in den Überwachungsbereich 12 ein, mischt sich vom Objekt 34 emittiertes Objektlicht 136, beispielsweise reflektiertes Umgebungslicht, mit dem Referenzlicht 132 und gelangt als Empfangslicht 138 zum Lichtempfänger 120, das aufgrund der Mischung eine spektrale Charakteristik aufweist, die von der vorgegebenen spektralen Charakteristik des Referenzlichts 132 abweicht. Somit kann wie in den oben beschriebenen Ausführungsbeispielen der Eingriff eines Objekts 34 in den Überwachungsbereich 12 erfasst werden. Die Referenzlichtquelle 116 kann wie die oben beschriebenen Sendelichtquellen breitbandiges Referenzlicht emittieren oder mehrere, Referenzlicht diskreter Wellenlängen oder Wellenlängenbereiche emittierende Referenzlichtquellen umfassen, wobei letztere von der Steuer- und Auswerteeinheit 24 alternierend aktiviert werden können. Ebenso können verschiedene Teilstrukturen der Referenzstruktur 130 vergleichbar zum in Figur 3 gezeigten Ausführungsbeispiel Referenzlicht mit unterschiedlicher spektraler Charakteristik emittieren, beispielsweise indem den verschiedenen Bereichen Referenzlichtquellen mit Referenzlicht mit unterschiedlicher spektraler Charakteristik zugeordnet sind.

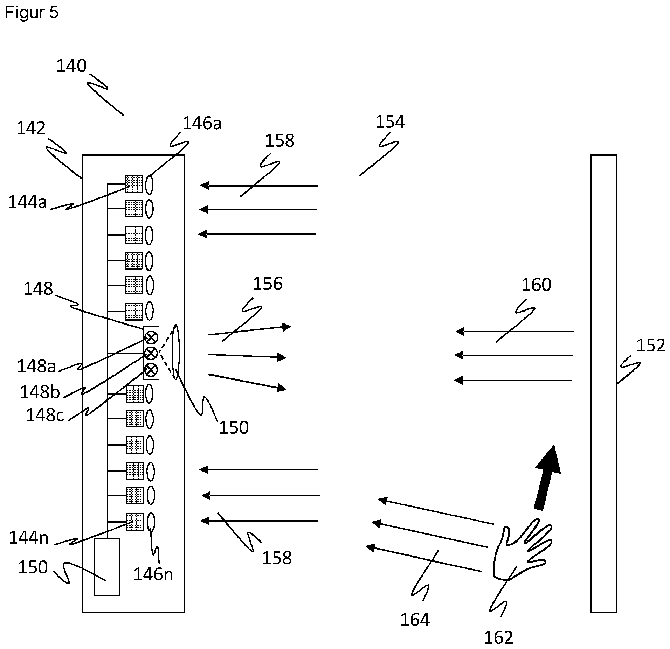

Figur 5 zeigt eine weitere mögliche Ausführungsform der Erfindung als tastendes Lichtgitter 140. Das Lichtgitter 140 weist ein Sende- und Empfangsmodul 142 mit einer Vielzahl von Lichtempfängern 144a, ..., 144n und zugeordneten Empfangsoptiken 146a, ..., 146n sowie einem Lichtsender 148 mit zugeordneter Sendeoptik 150 auf. Der Lichtsender 148 und die Lichtempfänger 144a, ..., 144n sind mit einer Steuer- und Auswerteeinheit 150 verbunden. Dem Sende- und Empfangsmodul 142 gegenüberliegend ist eine Referenzstruktur 152 angeordnet, so dass der Bereich zwischen dem Sende- und Empfangsmodul 142 und der Referenzstruktur 152 einen Überwachungsbereich 154 bildet. Die Steuer- und Auswerteeinheit 150 ist wie bei einem tastenden Lichtgitter üblich dazu eingerichtet, Lichtlaufzeiten zwischen dem Aussenden von Sendelicht 156 und dem Empfangen von Empfangslicht 158, das aus von Objekten im Überwachungsbereich 150 und/oder der Referenzstruktur 148 remittiertem und/oder reflektiertem Sendelicht 152 gebildet wird, zu ermitteln. Tritt ein Objekt zwischen einem Sende- und Empfangsmodul 142 und der Referenzstruktur 148 in den Überwachungsbereich 150 ein, verkürzt sich die Lichtlaufzeit, wodurch ein Eingriff des Objekts in den Überwachungsbereich erfasst werden kann. Zusätzlich zur Messung der Lichtlaufzeit kann erfindungsgemäß eine Erfassung der spektralen Charakteristik des Empfangslichts 158 erfolgen, beispielsweise vergleichbar zu dem in Figur 2 beschriebenen Ausführungsbeispiel. Dazu weist der Lichtsender 148 eine Vielzahl von Sendelichtquellen 148a, 148b, 148c aus, die Sendelicht 156 mit einer vorgegebenen diskreten Wellenlänge (oder eines Wellenlängenbereichs) aussenden, die sich von den Wellenlängen (oder den Wellenlängenbereichen) des von den jeweils anderen Sendelichtquellen emittierten Sendelichts zumindest teilweise unterscheidet. Die Sendelichtquellen 148a, 148b, 148c werden alternierend aktiviert, so dass jeweils nur eine der Sendelichtquellen 148a, 148b, 148c Sendelicht 156 emittiert, welches von der Sendeoptik in den Überwachungsbereich 154 projiziert wird und von der gegenüberliegenden Referenzstruktur 152 als Referenzlicht 160 mit einer vorgegebenen spektralen Charakteristik remittiert und/oder reflektiert wird. Befindet sich ein Objekt 162 im Überwachungsbereich 154, wird Sendelicht 156 vom Objekt 162 als Objektlicht 164 remittiert und/oder reflektiert. Referenzlicht und/oder Objektlicht gelangen als Empfangslicht 158 zurück zum Sensor und werden von den Lichtempfängern 144a, ..., 144n erfasst. Die Steuer- und Auswerteeinheit 150 ist dabei dazu eingerichtet, die Sendelichtquellen 148a, 148b, 148c und die Lichtempfänger 144a, ..., 144n derart zu synchronisieren, dass den Empfangssignalen der Lichtempfänger 144a, ..., 144n die jeweilige Wellenlänge des Sendelichts 156 zugeordnet ist und somit die spektrale Charakteristik des Empfangslichts 158 erfasst werden kann. Die erfasste spektrale Charakteristik des Empfangslichts 158 kann mit der in der Steuer- und Auswerteeinheit 150 hinterlegten vorgegebenen spektralen Charakteristik des Referenzlichts 160 verglichen werden. Somit ist eine Objekterkennung diversitär sowohl über die Messung der Lichtlaufzeit als auch durch die Erfassung der spektralen Charakteristik des Empfangslichts 158 möglich.

Das letztgenannte Ausführungsbeispiel bezieht sich auf ein tastendes Lichtgitter mit einem zentralen Lichtsender 148 und einer Vielzahl von Lichtempfängern 144a, ..., 144n, wobei das vom Lichtsender 148 emittierte Sendlicht sowohl für die tastende Funktion des Lichtgitters mittels Analyse der Lichtlaufzeit als auch zur erfindungsgemäßen spektralen Überwachung des Überwachungsbereichs 154 ausgebildet ist.

Selbstverständlich sind hier auch andere Varianten einer Kombination der erfindungsgemäßen Vorrichtung mit bekannten Lichtgittern denkbar. So können im oben gezeigten Ausführungsbeispiel mehrere Lichtsender 148, insbesondere je ein Lichtsender 148 pro Lichtempfänger 144a, ..., 144n, vorgesehen sein. Weiterhin kann auch ein herkömmliches tastendes (oder nicht tastendes) Lichtgitter mit einer erfindungsgemäßen spektralen Überwachung kombiniert werden, wobei die räumliche Überwachung durch das Lichtgitter in einem anderen Wellenlängenbereich erfolgen kann als die spektrale Überwachung. Die Lichtempfänger des Lichtgitters und der Lichtempfänger zur spektralen Überwachung können dabei optische Bandpassfilter zur Verminderung von Störsignalen der jeweils anderen Lichtsender aufweisen, so dass eine spektrale Überwachung simultan zur räumlichen Überwachung erfolgen kann. Die Ergebnisse der spektralen und der räumlichen Überwachung können dann verknüpft und logisch verarbeitet werden, wodurch die Sicherheit des Systems erhöht wird.

## Patentansprüche

1. Vorrichtung (10, 40, 70, 100, 140) zur Überwachung eines Überwachungsbereichs (12, 154) mit
- wenigstens einer Referenzstruktur (30, 90, 130, 152) zur Erzeugung von Referenzlicht (32, 52, 82, 132, 160) mit einer vorgegebenen spektralen Charakteristik,
- einem spektral sensitiven optoelektronischen Sensor umfassend wenigstens einen Lichtempfänger (20, 62, 92, 120, 144a, ..., 144n) zur Erfassung von Empfangslicht (38, 58, 88, 138, 158) aus dem Überwachungsbereich (12, 154) und zum Erzeugen von Empfangssignalen aus dem Empfangslicht (38, 58, 88, 138, 158), wobei das Empfangslicht (38, 58, 88, 138, 158) das Referenzlicht (32, 52, 82, 132, 160) und/oder von Objekten (34, 162) im Überwachungsbereich (12, 154) remittiertes und/oder reflektiertes Objektlicht (36, 56, 86, 136, 164) umfasst, und eine Steuer- und Auswerteeinheit (24, 124, 150) zum Ansteuern des Lichtempfängers (20, 62, 92, 120, 144a, ..., 144n) und zum Empfangen der Empfangssignale, wobei
die Steuer- und Auswerteeinheit (24, 124, 150) dazu ausgebildet ist, aus den Empfangssignalen eine erfasste spektrale Charakteristik des Empfangslichts (38, 58, 88, 138, 158) zu bestimmen, die erfasste spektrale Charakteristik des Empfangslichts (38, 58, 88, 138, 158) mit der vorgegebenen spektralen Charakteristik des Referenzlichts (32, 52, 82, 132, 160) zu vergleichen und bei einer vorbestimmten Abweichung der erfassten spektralen Charakteristik von der vorgegebenen spektralen Charakteristik eine sicherheitsgerichtete Aktion auszulösen,
**dadurch gekennzeichnet, dass** der spektral sensitive optoelektronische Sensor als bildgebender Spektralsensor zur räumlich aufgelösten Ermittlung von Spektraldaten der Objekte (34, 162) im Überwachungsbereich (12, 154) und insbesondere der Referenzstruktur (30, 90, 130, 152) ausgeführt ist.

2. Vorrichtung (10, 40, 70, 140) nach Anspruch 1, wobei die Vorrichtung (10, 40, 70, 140) wenigstens eine Sendelichtquelle (16, 46a, 46b, 46c, 76, 148a, 148b, 148c) zur Beleuchtung der Referenzstruktur (30, 90, 152) mit Sendelicht (28, 48, 78, 156) aufweist .

3. Vorrichtung (40, 140) nach Anspruch 2, wobei die Vorrichtung (40, 140) eine Vielzahl von Sendelichtquellen (46a, 46b, 46c, 148a, 148b, 148c) aufweist.

4. Vorrichtung (10, 40, 70, 140) nach Anspruch 2, wobei das Referenzlicht (32, 52, 82, 160) durch Remission und/oder Reflexion des Sendlichts (28, 48, 78, 156) an der Referenzstruktur (30, 90, 152) erzeugt wird.

5. Vorrichtung (10, 40, 70, 140) nach Anspruch 2, wobei das Referenzlicht (32, 52, 82, 160) durch Lumineszenz, insbesondere durch Fluoreszenz der Referenzstruktur (30, 90, 152) erzeugt wird.

6. Vorrichtung nach einem der Ansprüche 2 bis 5, wobei die Steuer- und Auswerteeinheit (24, 150), zur Ansteuerung der wenigstens einen Sendelichtquelle (16, 46a, 46b, 46c, 76, 148a, 148b, 148c) ausgebildet ist.

7. Vorrichtung (100) nach Anspruch 1, wobei die Referenzstruktur (130) zur Erzeugung des Referenzlichts (132) wenigstens eine Referenzlichtquelle (116) aufweist.

8. Vorrichtung (100) nach Anspruch 7, wobei die Steuer- und Auswerteeinheit (124) zur Ansteuerung der Referenzlichtquelle (116) ausgebildet ist.

9. Vorrichtung (10, 40, 70, 100, 140) nach einem der vorhergehenden Ansprüche, wobei die Referenzstruktur (30, 90, 130, 152) den Überwachungsbereich (12, 154) zumindest teilweise begrenzt.

10. Vorrichtung (70) nach einem der vorhergehenden Ansprüche, wobei die Referenzstruktur (90) wenigstens zwei Teilstrukturen (90a, 90b) aufweist, wobei eine erste Teilstruktur (90a) erstes Referenzlicht (82a) mit einer ersten vorgegebenen spektralen Charakteristik erzeugt, und eine zweite Teilstruktur (90b) zweites Referenzlicht (82a) mit einer zweiten vorgegebenen spektralen Charakteristik erzeugt.

11. Verfahren zur Überwachung eines Überwachungsbereiches (12, 154) mit den Schritten
- Erzeugen von Referenzlicht (32, 52, 82, 132, 160) mit einer vorgegebenen spektralen Charakteristik durch eine Referenzstruktur (30, 90, 130, 152),
- Erfassen von Empfangslicht (38, 58, 88, 138, 158) aus dem Überwachungsbereich (12, 154) mit wenigstens einem Lichtempfänger (20, 62, 92, 120, 144a, ..., 144n) eines spektral sensitiven optoelektronischen Sensors, wobei das Empfangslicht (38, 58, 88, 138, 158) das Referenzlicht (32, 52, 82, 132, 160) und/oder von Objekten (34, 162) im Überwachungsbereich (12, 154) remittiertes und/oder reflektiertes Objektlicht (36, 56, 86, 136, 164) umfasst,
- Erzeugen von Empfangssignalen aus dem Empfangslicht (38, 58, 88, 138, 158) mit dem wenigstens einen Lichtempfänger (20, 62, 92, 120, 144a, ..., 144n),
- Empfangen der Empfangssignale mit einer Steuer- und Auswerteeinheit (24, 124, 150) des spektral sensitiven optoelektronischen Sensors,
- Räumlich aufgelöstes Ermitteln von Spektraldaten der Objekte (34, 162) im Überwachungsbereich (12, 154) und insbesondere der Referenzstruktur (30, 90, 130, 152) mit dem spektral sensitiven optoelektronischen Sensor, wobei der spektral sensitive optoelektronische Sensor als bildgebender Spektralsensor zur räumlich aufgelösten Ermittlung der Spektraldaten der Objekte (34, 162) im Überwachungsbereich (12, 154) und insbesondere der Referenzstruktur (30, 90, 130, 152) ausgeführt ist,
- Bestimmen einer erfassten spektralen Charakteristik des Empfangslichts (38, 58, 88, 138, 158) mit der Steuer- und Auswerteeinheit (24, 124, 150),
- Vergleichen der erfassten spektralen Charakteristik des Empfangslichts (38, 58, 88, 138, 158) mit der vorgegebenen spektralen Charakteristik des Referenzlichts (32, 52, 82, 132, 160),
- Auslösen einer sicherheitsgerichteten Aktion bei einer vorbestimmten Abweichung der erfassten spektralen Charakteristik von der vorgegebenen spektralen Charakteristik.

12. Verfahren nach Anspruch 11, wobei die Referenzstruktur (30, 90, 152) mit Sendelicht (28, 48, 78, 156) beleuchtet wird, wobei das Referenzlicht (32, 52, 82, 160) durch Remission und/oder Reflexion des Sendlichts (28, 48, 78, 156) an der Referenzstruktur (30, 90, 152) erzeugt wird.

13. Verfahren nach Anspruch 11, wobei die Referenzstruktur (30, 90, 152) mit Sendelicht (28, 48, 78, 156) beleuchtet wird, wobei die das Referenzlicht (32, 52, 82, 160) durch Lumineszenz, insbesondere durch Fluoreszenz der Referenzstruktur (30, 90, 152), erzeugt wird.

14. Verfahren nach Anspruch 11, wobei die Referenzstruktur (130) wenigstens eine Referenzlichtquelle (116) aufweist, die das Referenzlicht (132) erzeugt.

15. Verfahren nach einem der Ansprüche 11 bis 14, wobei in einem Einlernvorgang die vorgegebene spektrale Charakteristik des Referenzlichts (32, 52, 82, 132, 160) bei freiem Überwachungsbereich (12, 154) eingelernt und in der Steuer- und Auswerteeinheit (24, 124, 150) hinterlegt wird.

## Claims

1. A device (10, 40, 70, 100, 140) for monitoring a monitored zone (12, 154) having
- at least one reference structure (30, 90, 130, 152) for generating reference light (32, 52, 82, 132, 160) having a specified spectral characteristic;
- a spectrally sensitive optoelectronic sensor comprising at least one light receiver (20, 62, 92, 120, 144a, ..., 144n) for detecting received light (38, 58, 88, 138, 158) from the monitored zone (12, 154) and for generating received signals from the received light (38, 58, 88, 138, 158), wherein the received light (38, 58, 88, 138, 158) comprises the reference light (32, 52, 82, 132, 150) and/or object light (36, 56, 86 136, 164) remitted and/or reflected by objects (34, 162) in the monitored zone (12, 154) and a control and evaluation unit (24, 124, 150) for controlling the light receiver (20, 62, 92, 120, 144a, ..., 144n) and for receiving the received signals, wherein
the control and evaluation unit (24, 124, 150) is configured to determine a detected spectral characteristic of the received light (38, 58, 88, 138, 158) from the received signals, to compare the detected spectral characteristic of the received light (38, 58, 88, 138, 158) with the specified spectral characteristic of the reference light (32, 52, 82, 132, 160), and to trigger a safety directed action on a predetermined deviation of the detected spectral characteristic,
**characterized in that** the spectrally sensitive optoelectronic sensor is designed as an imaging spectral sensor for the spatially resolved determination of spectral data of the objects (34, 162) in the monitored zone (12, 154) and in particular of the reference structure (30, 90, 130, 152).

2. A device (10, 40, 70, 140) in accordance with claim 1, wherein the device (10, 40, 70, 140) has at least one transmitted light source (16, 46a, 46b, 46c, 76, 148a, 148b, 148c) for illuminating the reference structure (30, 90, 152) with transmitted light (28, 48, 78, 156).

3. A device (40, 140) in accordance with claim 2, wherein the device (40, 140) has a plurality of transmitted light sources (46a, 46b, 46c, 148a, 148b, 148c).

4. A device (10, 40, 70, 140) in accordance with claim 2, wherein the reference light (32, 52, 82, 160) is generated by remission and/or reflection of the transmitted light (28, 48, 78, 156) at the reference structure (30, 90, 152).

5. A device (10, 40, 70, 140) in accordance with claim 2, wherein the reference light (32, 52, 82, 160) is generated by luminescence, in particular by fluorescence, of the reference structure (30, 90, 152).

6. A device in accordance with any one of the claims 2 to 5, wherein the control and evaluation unit (24, 150) is configured to control the at least one transmitted light source (16, 46a, 46b, 76, 148a, 148b, 148c).

7. A device (100) in accordance with claim 1, wherein the reference structure (130) has at least one reference light source (116) to generate the reference light (132).

8. A device (100) in accordance with claim 7, wherein the control and evaluation unit (124) is configured to control the reference light source (116).

9. A device (10, 40, 70, 100, 140) in accordance with any one of the preceding claims, wherein the reference structure (30, 90, 130, 152) at least partly bounds the monitored zone (12, 154).

10. A device (70) in accordance with any one of the preceding claims, wherein the reference structure (90) has at least two partial structures (90a, 90b), with a first partial structure (90a) generating first reference light (82a) having a first specified spectral characteristic and with a second spatial structure (90b) generating second reference light (82a) having a second specified spectral characteristic.

11. A method of monitoring a monitored zone (12, 154), the method comprising the steps
- generating reference light (32, 52, 82, 132, 160) having a specified spectral characteristic by a reference structure (30, 90, 130, 152);
- detecting received light (38, 58, 88, 138, 158) from the monitored zone (12, 154) by at least one light receiver (20, 62, 92, 120, 144a, ..., 144n) of a spectrally sensitive optoelectronic sensor, wherein the received light (38, 58, 88, 138, 158) comprises the reference light (32, 52, 82, 132, 160) and/or object light (36, 56, 86, 136, 164) remitted and/or reflected by objects (34, 162) in the monitored zone (12, 154);
- generating received signals from the received light (38, 58, 88, 138, 158) by the at least one light receiver (20, 62, 92, 120, 144a, ..., 144n);
- receiving the received signals by a control and evaluation unit (24, 124, 150) of the spectrally sensitive optoelectronic sensor;
- determining spectral data of the objects (34, 162) in the monitored zone (12, 154) and in particular of the reference structure (30, 90, 130, 152) in a spatially resolved manner by the spectrally sensitive optoelectronic sensor, wherein the spectrally sensitive optoelectronic sensor is designed as an imaging spectral sensor for the determining of spectral data of the objects (34, 162) in the monitored zone (12, 154) and in particular of the reference structure (30, 90, 130, 152) in a spatially resolved manner;
- determining a detected spectral characteristic of the received light (38, 58, 88, 138, 158) by the control and evaluation unit (24, 124, 150);
- comparing the detected spectral characteristic of the received light (38, 58, 88, 138, 158) having the specified spectral characteristic of the reference light (32, 52, 82, 132, 160); and
- triggering a safety directed action on a predetermined deviation of the detected spectral characteristics from the specified spectral characteristic.

12. A method in accordance with claim 11, wherein the reference structure (30, 90, 152) is illuminated by transmitted light (28, 48, 78, 156), wherein the reference light (32, 52, 82, 160) is generated by remission and/or reflection of the transmitted light (28, 48, 78, 156) at the reference structure (30, 90, 152).

13. A method in accordance with claim 11, wherein the reference structure (30, 90, 152) is illuminated by transmitted light (28, 48, 78, 156), wherein the reference light (32, 52, 82, 160) is , generated by luminescence, in particular by fluorescence, of the reference structure (30, 90, 152).

14. A method in accordance with claim 11, wherein the reference structure (130) has at least one reference light source (116) that generates the reference light (132).

15. A method in accordance with any one of the claims 11 to 14, wherein the specified spectral characteristic of the reference light (32, 52, 82, 132, 160) is taught in a teaching process with a free monitored zone (12, 154) and is stored in the control and evaluation unit (24, 124, 150).

## Revendications

1. Dispositif (10, 40, 70, 100, 140) de surveillance d'une zone à surveiller (12, 154), comportant
- au moins une structure de référence (30, 90, 130, 152) destinée à produire une lumière de référence (32, 52, 82, 132, 160) ayant une caractéristique spectrale prédéfinie,
- un capteur optoélectronique à sensibilité spectrale comprenant au moins un récepteur de lumière (20, 62, 92, 120, 144a, ... , 144n) pour détecter une lumière de réception (38, 58, 88, 138, 158) provenant de la zone à surveiller (12, 154) et pour produire des signaux de réception à partir de la lumière de réception (38, 58, 88, 138, 158), la lumière de réception (38, 58, 88, 138, 158) comprenant la lumière de référence (32, 52, 82, 132, 160) et/ou la lumière d'objet (36, 56, 86, 136, 164) renvoyée et/ou réfléchie par des objets (34, 162) situés dans la zone à surveiller (12, 154), et comprenant une unité de commande et d'évaluation (24, 124, 150) pour commander le récepteur de lumière (20, 62, 92, 120, 144a, ..., 144n) et pour recevoir les signaux de réception,
dans lequel
l'unité de commande et d'évaluation (24, 124, 150) est conçue pour déterminer à partir des signaux de réception une caractéristique spectrale détectée de la lumière de réception (38, 58, 88, 138, 158), pour comparer la caractéristique spectrale détectée de la lumière de réception (38, 58, 88, 138, 158) avec la caractéristique spectrale prédéfinie de la lumière de référence (32, 52, 82, 132, 160) et, en cas d'écart prédéterminé entre la caractéristique spectrale détectée et la caractéristique spectrale prédéfinie, pour déclencher une action orientée vers la sécurité,
**caractérisé en ce que** le capteur optoélectronique à sensibilité spectrale est réalisé sous forme de capteur spectral d'imagerie pour déterminer avec résolution spatiale les données spectrales des objets (34, 162) situés dans la zone à surveiller (12, 154) et en particulier de la structure de référence (30, 90, 130, 152).

2. Dispositif (10, 40, 70, 140) selon la revendication 1,
dans lequel le dispositif (10, 40, 70, 140) comprend au moins une source de lumière d'émission (16, 46a, 46b, 46c, 76, 148a, 148b, 148c) pour éclairer la structure de référence (30, 90, 152) avec une lumière d'émission (28, 48, 78, 156).

3. Dispositif (40, 140) selon la revendication 2,
dans lequel le dispositif (40, 140) comprend une pluralité de sources de lumière d'émission (46a, 46b, 46c, 148a, 148b, 148c).

4. Dispositif (10, 40, 70, 140) selon la revendication 2,
dans lequel la lumière de référence (32, 52, 82, 160) est produite par renvoi et/ou réflexion de la lumière d'émission (28, 48, 78, 156) sur la structure de référence (30, 90, 152).

5. Dispositif (10, 40, 70, 140) selon la revendication 2,
dans lequel la lumière de référence (32, 52, 82, 160) est produite par luminescence, en particulier par fluorescence de la structure de référence (30, 90, 152).

6. Dispositif selon l'une des revendications 2 à 5,
dans lequel l'unité de commande et d'évaluation (24, 150) est conçue pour commander ladite au moins une source de lumière d'émission (16, 46a, 46b, 46c, 76, 148a, 148b, 148c).

7. Dispositif (100) selon la revendication 1,
dans lequel la structure de référence (130) destinée à produire la lumière de référence (132) comprend au moins une source de lumière de référence (116).

8. Dispositif (100) selon la revendication 7,
dans lequel l'unité de commande et d'évaluation (124) est conçue pour commander la source de lumière de référence (116).

9. Dispositif (10, 40, 70, 100, 140) selon l'une des revendications précédentes, dans lequel la structure de référence (30, 90, 130, 152) délimite au moins partiellement la zone à surveiller (12, 154).

10. Dispositif (70) selon l'une des revendications précédentes,
dans lequel la structure de référence (90) comprend au moins deux sous-structures (90a, 90b), une première sous-structure (90a) produisant une première lumière de référence (82a) ayant une première caractéristique spectrale prédéfinie, et une deuxième sous-structure (90b) produisant une deuxième lumière de référence (82a) ayant une deuxième caractéristique spectrale prédéfinie.

11. Procédé de surveillance d'une zone à surveiller (12, 154), comprenant les étapes consistant à
- produire une lumière de référence (32, 52, 82, 132, 160), ayant une caractéristique spectrale prédéfinie, par une structure de référence (30, 90, 130, 152),
- détecter une lumière de réception (38, 58, 88, 138, 158) provenant de la zone à surveiller (12, 154) avec au moins un récepteur de lumière (20, 62, 92, 120, 144a, ..., 144n) d'un capteur optoélectronique à sensibilité spectrale, la lumière de réception (38, 58, 88, 138, 158) comprenant la lumière de référence (32, 52, 82, 132, 160) et/ou la lumière d'objet (36, 56, 86, 136, 164) renvoyée et/ou réfléchie par des objets (34, 162) situés dans la zone à surveiller (12, 154),
- produire des signaux de réception à partir de la lumière de réception (38, 58, 88, 138, 158) avec ledit au moins un récepteur de lumière (20, 62, 92, 120, 144a, ..., 144n),
- recevoir les signaux de réception avec une unité de commande et d'évaluation (24, 124, 150) du capteur optoélectronique à sensibilité spectrale,
- déterminer avec résolution spatiale des données spectrales des objets (34, 162) situés dans la zone à surveiller (12, 154) et en particulier de la structure de référence (30, 90, 130, 152) avec le capteur optoélectronique à sensibilité spectrale, le capteur optoélectronique à sensibilité spectrale étant réalisé sous forme de capteur spectral d'imagerie pour déterminer avec résolution spatiale les données spectrales des objets (34, 162) situés dans la zone à surveiller (12, 154) et en particulier de la structure de référence (30, 90, 130, 152),
- déterminer une caractéristique spectrale détectée de la lumière de réception (38, 58, 88, 138, 158) avec l'unité de commande et d'évaluation (24, 124, 150),
- comparer la caractéristique spectrale détectée de la lumière de réception (38, 58, 88, 138, 158) avec la caractéristique spectrale prédéfinie de la lumière de référence (32, 52, 82, 132, 160),
- déclencher une action orientée vers la sécurité en cas d'écart prédéterminé entre la caractéristique spectrale détectée et la caractéristique spectrale prédéfinie.

12. Procédé selon la revendication 11,
dans lequel la structure de référence (30, 90, 152) est éclairée par une lumière d'émission (28, 48, 78, 156), la lumière de référence (32, 52, 82, 160) étant produite par renvoi et/ou réflexion de la lumière d'émission (28, 48, 78, 156) sur la structure de référence (30, 90, 152).

13. Procédé selon la revendication 11,
dans lequel la structure de référence (30, 90, 152) est éclairée par une lumière d'émission (28, 48, 78, 156), la lumière de référence (32, 52, 82, 160) étant produite par luminescence, en particulier par fluorescence de la structure de référence (30, 90, 152).

14. Procédé selon la revendication 11,
dans lequel la structure de référence (130) comprend au moins une source de lumière de référence (116) produisant la lumière de référence (132).

15. Procédé selon l'une des revendications 11 à 14,
dans lequel la caractéristique spectrale prédéfinie de la lumière de référence (32, 52, 82, 132, 160) est apprise lors d'un processus d'apprentissage, la zone à surveiller (12, 154) étant libre, et est enregistrée dans l'unité de commande et d'évaluation (24, 124, 150).
